# EUROPEAN PATENT SPECIFICATION

(11) **EP 3 695 160 B1**
(45) Date of publication and mention of the grant of the patent: **19.07.2023**
(21) Application number: 18866647.3
(22) Date of filing: 02.10.2018
(51) Int. Cl.: C01B 32/55, F17C 7/00, F25J 1/00, B30B 11/26

(54) **DRY ICE PELLETIZER**
TROCKENEISGRANULATOR
PASTILLEUSE À GLACE SÈCHE

(30) Priority: 09.10.2017 DK PA201700564
(43) Date of publication of application: 19.08.2020
(73) Proprietor: Cold Blasting APS, 5500 Middelfart (DK)
(72) Inventor: LYHOLM JOHANSEN, Steen, 5500 Middelfart (DK)
(74) Representative: Patrade A/S
(86) International application number: PCT/DK2018/050249
(87) International publication number: WO 2019/072347

(56) References cited:
- EP-A1- 1 328 765
- EP-B1- 1 328 765
- WO-A1-02/21059
- WO-A1-95/02797
- JP-A- H0 761 805
- JP-B1- S5 228 751
- KR-A- 20150 028 027
- US-A- 5 845 516
- DATABASE WPI Week 200876 Thomson Scientific, London, GB; AN 2008-M96336 XP002803067, -& KR 2007 0113574 A (VICTEX CO LTD) 29 November 2007 (2007-11-29)
- DATABASE WPI Week 201705 Thomson Scientific, London, GB; AN 2017-00012L XP002803068, -& WO 2016/209120 A1 (IRBIS TECHNOLOGY LLC) 29 December 2016 (2016-12-29)

## Description

### FIELD OF THE INVENTION

The present invention relates to an apparatus for the production of dry ice pellets, also known as a dry ice pelletizer.

### BACKGROUND OF THE INVENTION

Dry ice pellets are used in connection with refrigeration of food, as the ice evaporates during melting at room temperature and does not leave residues. In addition, the substance is not toxic, which is an important aspect.

Another use of dry ice pellets is for dry ice blasting for cleaning surfaces. Dry ice pellets are accelerated and directed towards the surface of an object for removing the surface coating, such as paint residues or dirt.

Dry ice pellets are usually supplied in thermo-insulating boxes from gas supply companies. The life time of dry ice pellets in the thermo-insulating boxes is limited to 14-21 days, and the quality of the dry ice diminishes due to evaporation and water condensate absorbed from the environment during handling, especially for dry ice pellets with small dimensions intended for dry ice blasting. The waste is therefore relatively high and the quality diminished.

Examples of apparatus for making dry ice pellets are given in European patent EP 1328765 B1 from Cold Blasting and U.S. Patents US 5473903 A from Cold Jet Inc. and US 5845516 A from Carbonic Reserves. Further examples of such apparatus are given in patent applications KR 20070113574 A from Victex Co. and WO 2016/209120 A1 equal to EP 3315193 A1 from Irbis Technology LLC.

### DESCRIPTION / SUMMARY OF THE INVENTION

It is the objective of the invention to provide an improved apparatus for the production of dry ice pellets. It is especially the objective to provide a dry ice pelletizer that is compact and suitable for quick start/stop. It is a further objective to provide a method for producing dry ice pellets directly for consumption, with high quality, and in dimensions that are usually difficult to manage due to evaporation and water condensation from the surroundings. The invention is intended to integrate dry ice pellet production into apparatus or equipment that consumes dry ice pellets, manually or automatically. This could be, for example, for a robot solution with dry ice blasting.

The objective is achieved by an apparatus for production of dry ice pellets according to claim 1, comprising a plurality of press chambers with moveable pistons for compressing carbon dioxide in solid phase and for pressing the solid carbon dioxide through a hole plate provided at the end of each press chamber, wherein the press chambers of the apparatus are arranged at a distance around a central axis, wherein each of the press chambers is provided with its own piston and with an axis of motion, along which the piston reciprocates, and wherein the apparatus comprises a common drive arranged to actuate the pistons alternately one by one in a rotary direction around the central axis.

For example, the motion axes of the pistons are parallel to the central axis. In a specific embodiment, the pistons are disposed on a circle about the central axis.

Due to the apparatus according to the invention being provided with a plurality of press chambers, a production of dry ice pellets comparable to the production by much larger known installations with one, two or three press chambers can be obtained with press chambers much smaller than in the prior art. This results in a device that is much more compact and lighter than known installations.

For example, the dry ice pelletizer described below can be installed at the point of use and typically has a size that allows several of this type being set up as separate units in this connection. Typically, the present invention will weigh less than 50 kg and have a size of less than 50 liters, which is advantageous over the typically known devices, which often weigh over 150 kg and have a size of about 500 liters.

The smaller press chambers in an apparatus according to the invention must withstand a pressure comparable to the pressure in larger press chambers of known installations, but adequate wall thickness of the small chambers can be constructed smaller than the wall thickness in large chambers, which is saving material. As also the piston area can be provided smaller than in known devices, the total force on the pistons is smaller, by which lesser material is used for the pistons. Less material also implies also that there is less to be cooled down, and it is therefore possible to interrupt and start the production of dry ice pellets very quickly, which means that there is no need for a large storage tank for the dry ice pellets.

Several smaller press chambers result in a larger filter area such that carbon dioxide gas formed by expansion of liquid carbon dioxide more easily leaves the press chambers. This affects the pressure in the press chambers, which has an impact on the capacity. It is critical that the pressure is kept below a limit of 5.18 bar (A) for the formation of dry ice.

In some embodiments, a center shaft with a carbon dioxide supply in the center shaft is provided on and parallel to the central axis. There is then a supply of liquid carbon dioxide to the press chambers through the center shaft. Liquid carbon dioxide flows, for example, through the center shaft via an axially and longitudinally oriented channel, for example from the shaft end, and further through a radial conduit to an area on the outside of the center shaft, which is encased in a distributor chamber.

For example, each of the press chambers is connected to the center shaft through a conduit, and the center shaft is provided rotationally in the direction of rotation and has an opening, which by rotation connects to the conduits of the press chambers one by one for thereby feeding the liquid dioxide in liquid phase successively in the direction of rotation to the various press chambers during rotation.

In that case, the center shaft rotates, and the distributor housing is stationary. In the distributor housing, there are provided conduits that lead carbon dioxide to each press chamber. Access to the press chambers may be tangential to form turbulence and promote the separation of gas. The point in time and time course for the supply of liquid carbon dioxide to each single press chamber is determined by the size and location of the radial conduit in the center shaft. In each single conduit in the distributor housing there are nozzles, the size of which determines the amount of liquid carbon dioxide. The construction is a simple way of distributing liquid carbon dioxide to the press chambers and replaces advanced valve systems.

In some embodiments, the pistons are connected to a common swash plate, also called wobble plate, driven by a motor, for example a gasoline engine, a diesel engine or an electric motor. Options include pneumatic or hydraulic systems. The swash plate has a rotational axle on and parallel to the central axis, where the swash plate is inclined relative to the central axis, and wherein the pistons are connected to the swash plate so that the swash plate moves the pistons one by one in their respective pressing chamber during the rotation in the rotary direction. Advantageously, the center shaft rotates together with the swash plate for distribution of liquid carbon dioxide to the press chambers. For example, between the swash plate and the pistons, an axial bearing is arranged such that the swash plate can rotate freely relatively to the pistons.

The construction is simpler than, for example, a crank or hydraulic drive at multiple press chambers. There is in principle no limitation on the number of press chambers in an apparatus according to the invention.

The apparatus is constructed with press chambers located axially around a center shaft and parallel to the center shaft. For example, the outlets for dry ice can be collected via channels to a common outlet with a common hole plate. There is a saving by only providing one single hole plate, which also makes it easier to integrate the device into other equipment with just a single outlet delivering dry ice pellets. The hole plate may have larger or smaller diameter and have one or more holes. The holes can be circular, square and with other shapes.

The pistons in the different chambers go through their motion cycle time-wise shifted one after the other, which is due to the rotating swash plate, whose highest point rotates with the shaft due to the oblique orientation relative to the rotary axis. Together with a relatively high production frequency, an almost continuous supply of dry ice pellets to the consumer is achieved, which is of great importance in, for example, dry ice blasting.

Typical dry ice pellet sizes are 0.5 mm to 30 mm in diameter and 1 mm to 200 mm in length. However, the invention is not limited to these dry ice pellet sizes. The cross section of pellets may be circular, square or have other forms.

The apparatus according to the invention can be provided in different sizes and with different piston pressures. For example, the inner diameter of the press chambers is between 4 mm and 40 mm, preferably between 5 mm and 25 mm, and most preferably between 6 mm and 15 mm. The stroke length of the piston is, for example, between 2 mm and 100 mm, preferably between 3 mm and 50 mm, and most preferably between 5 mm and 20 mm. The piston pressure on the solid carbon dioxide is, for example, between 20 bar and 1000 bar, preferably between 80 bar and 500 bar, and most preferably between 120 bar and 300 bar. For example, a cycle for a press chamber where the piston is moved back and forth has a time length of between 0.001 seconds and 30 seconds, preferably between 0.005 seconds and 5 seconds, and most preferably between 0.01 and 1 second.

Gas from the liquid carbon dioxide is advantageously removed from the apparatus by a gas separator. Gas emerges because liquid carbon dioxide is often stored at the boiling point, and in the event of heat in the supply pipe, gas is generated due to evaporation. Gas in the supply causes stop of the dry ice production until the gas has passed and therefore affects the flow of dry ice pellets. The gas separator consists, for example, of a vessel, a float, and a valve system. The vessel is positioned so that gas seeks up to the top of the vessel and is blown out depending on the level of liquid carbon dioxide. By encapsulation of the gas separator, cold gas from the press chambers can cool the outer side of the gas separator vessel, and carbon dioxide can be recycled by condensation of gas to liquid carbon dioxide in the gas separator. Exhaust of carbon dioxide gas from the gas separator can, for example, happen directly to an enclosure, thereby replacing a piping system.

In one alternative embodiment, the apparatus comprises a carrier gas facility configured to supply a carrier gas for transporting the dry ice pellets from the hole plates to their destination, the carrier gas facility comprising a gas separator with an exhaust and an inlet, where the inlet is connected to a first duct for routing carbon dioxide gas from the press chambers to the gas separator, and where the exhaust is connected to a second duct for routing said carrier gas in the form of exhausted carbon dioxide gas from the gas separator to at least a position in front of the hole plate.

In another alternative embodiment, the apparatus comprises a carrier gas facility configured to supply a carrier gas for transporting the dry ice pellets from the hole plates to their destination, the carrier gas facility comprising a duct with an air inlet, where the duct is configured to be connected to an air supply for routing said carrier gas in the form of air to at least a position in front of the hole plate.

Dry ice pellets can be produced and guided directly from the hole plate and into a pipeline. By using carbon dioxide gas or air as carrier gas, dry ice pellets that are finished in production can be removed quickly, for example for transporting the dry ice pellets to another location or for inserting the dry ice pellets into an air stream used for dry ice blasting.

In one embodiment, the apparatus comprises a heat exchanger with a first outlet and a first inlet for the carbon dioxide gas and a second outlet and a second inlet for the liquid carbon dioxide, where heat from the liquid carbon dioxide is transferred to the expanded carbon dioxide gas in the heat exchanger.

Gas formed by expansion of liquid carbon dioxide to dry ice can be returned to liquid form and thus recovered by compression and cooling in a recycling installation. The ratio of dry ice to gas is approximately 50/50, depending on the thermodynamic conditions. The dry ice pelletizer and recycling installation can be built together in such a way that components are saved, or they can be installed separately to save space around the dry ice pelletizer. The recovery of carbon dioxide gas from dry ice presses is described in DK1328765T3.

In Summary: The apparatus is constructed from several parallel cylindrical press chambers located axially around a center shaft. Liquid carbon dioxide is passed via a rotary center shaft to each single press chamber one after the other by rotation of the center shaft, where the liquid carbon dioxide expands to gas and solids in the form of dry ice snow. In each press chamber there is a filter wall, a moving piston, and a hole plate at the end of each press chamber. The pistons push dry ice snow into massive dry ice through the hole plates, by which dry ice pellets are formed at the exit side. The apparatus can also be configured such that dry ice is led from press chambers via channels to a common hole plate. The common hole plate can be shaped to have only one hole in various shapes. The gas passes through porous filter walls. The pistons are driven via a motor-driven swash plate.

The device is compact and designed to integrate dry ice pellet production into appliances or equipment that consumes dry ice pellets, manually or automatically. This could be in conjunction with a robot solution with dry ice blasting. The apparatus is suitable for assembly with carbon dioxide gas recycling equipment, such that the use of liquid carbon dioxide is improved.

### SHORT DESCRIPTION OF THE DRAWINGS

The invention will be explained in the following with reference to the drawings in which:
FIG. 1 illustrates the structure and function of press chambers,
FIG. 2 illustrates the construction of press chambers with tangential supply of liquid carbon dioxide,
FIG. 3 illustrates construction with only one hole plate,
FIG. 4 illustrates the construction of a gas separator,
FIG. 5 illustrates gas separator function,
FIG. 6 illustrates construction using carbon dioxide exhaust gas for transport of dry ice pellets,
FIG. 7 illustrates construction using air for transportation of dry ice pellets,
FIG. 8 illustrates a combination with recovery of carbon dioxide exhaust gas,
FIG. 9 illustrates construction with separate recovery of carbon dioxide exhaust gas,
FIG. 10 illustrates reconstruction of recovery and heat exchanger for cooling liquid carbon dioxide.

### DETAILED DESCRIPTION / PREFERRED EMBODIMENT

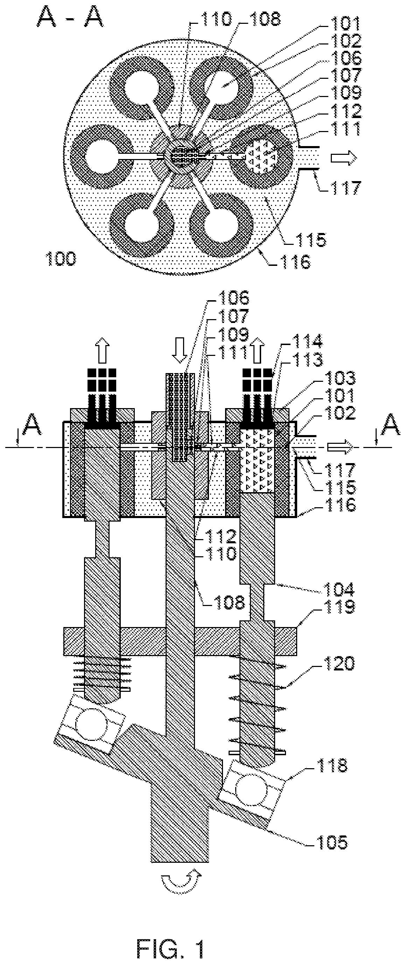

FIG. 1 shows a radial cross section and an axial cross section of a dry ice pelletizer 100 composed of several cylindrically shaped press chambers 101 disposed axially on a circle about a center shaft 108. In the press chambers 101, liquid carbon dioxide 106 expands to carbon dioxide gas 115 and dry ice snow 111, respectively. Carbon dioxide gas 115 is removed from the press chambers 101 via the walls, which are cylindrical filter walls 102 made of a porous material, for example porous metal or plastic. An option is sintered material.

Carbon dioxide gas 115 is collected in the gas chamber 116 and flows to duct 117, where it leaves the gas chamber. Dry ice snow 111 is held back in the press chambers 101 by the filter walls 102 and compressed by the pistons 104 to compact dry ice 113 against the hole plates 103. Compact dry ice pellets 114 are formed in the hole plates 103 and come out on the opposite side of the hole plates 103. The number, size, and shape of holes in the hole plates 103 may vary and determine the final configuration of the dry ice pellets 114. The hole plates 103 are made of a stable material, for example metal or plastic.

The pistons 104 are linearly movable in the press chambers 101 and are driven by a rotating swash plate 105 with an axial bearing 118 that is inclined relatively to the center shaft 108, and upon rotation, due to its inclined orientation, the pistons 104 press one after the other against the hole plates. The pistons 104 are pressed against the axial bearing 118 and the swash plate 105 by means of springs 120. The pistons 104 are cylindrical and preferably made of metal or plastic. The upper diameter of the pistons 104 corresponds to the diameter of the filter walls 103. At a distance from the press chambers 101, the diameter at the center may be smaller to optimize the insulation. The diameter of the lower part of the pistons 104 corresponds to the bearings in the bearing plate 119. The bearing plate 119 contains axial slide bearings for the pistons 104 and the radial slide bearing for the center shaft 108. The bearing plate 119 is, for example, made entirely or partially of a slide bearing material that is metal or plastic.

The lower ends of the pistons 104 end are curved, for example spherical, where they abut the axial bearing 118. The axial bearing 118 is an axial ball bearing or other form of axial bearing. The axial bearing 118 takes the loads from the pistons 104 and ensures that the swash plate 105 can rotate and the pistons 104 remain stationary in radial position but slide in axial direction. Springs 120 are mounted between the lower ends of the pistons 104 and the bearing plate 119 so that the pistons 104 constantly abut the axial bearing 118. The swash plate 105 and center shaft 108 are interconnected and rotate together, driven by a motor, electrically or by means of another form of power supply, for example hydraulic or pneumatic.

The top of the center shaft 108 rotates in the distributor housing 110. Liquid carbon dioxide 106 flows from the inlet of the distributor housing 110 through channel 107 in the center shaft 108 and further to the various nozzle apertures 109 in the distributor housing 110 one after the other during rotation of the center shaft 108 and from there through pipe 112 to the various press chambers 101, which are also filled with carbon dioxide one by one during rotation of the center shaft 108. The center shaft 108 is typically made of metal, plastic or ceramic material.

Channel 107 comprises an axial hole in the center shaft 108, e.g. from the top of the center shaft 108, which forms inlet for liquid carbon dioxide 106, and a radial hole in the side of the center shaft 108, which forms the liquid carbon dioxide 106 outlet. The outlet of channel 107 is in level of the nozzle apertures 109 in the distributor housing 110, and liquid carbon dioxide 106, which is under pressure (typically 10-25 Bar (A)), flows to the nozzle apertures 109 when the channel 107 passes by during rotation of center shaft 108. The location of the outlet of channel 107 relative to the swash plate 105 determines the timing of inflow of carbon dioxide 106 to the nozzle apertures 109. The diameter of the outlet of channel 107 determines the length of time of flow of liquid carbon dioxide to the nozzle apertures 109. In the nozzle apertures 109, the liquid carbon dioxide 106 expands to dry ice snow 111 and carbon dioxide gas 115. The nozzle apertures 109 are a part of the distributor housing 110, and the aperture size in the nozzle apertures 109 determines the flow rate. Dry ice snow 111 and carbon dioxide gas 115 are passed through pipe 112 to the press chamber 110.

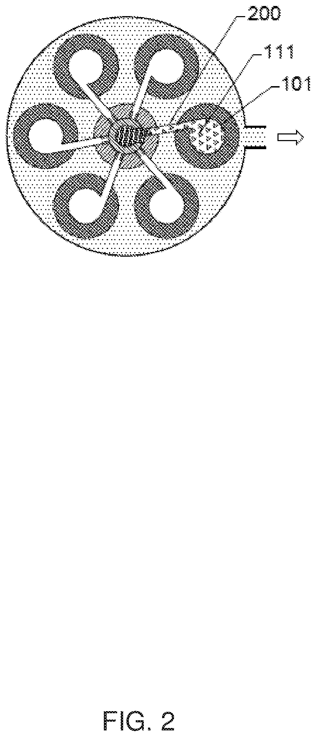

FIG. 2 shows tube 200 with dry ice snow 111 and carbon dioxide gas 115 which accesses the press chamber 101 tangentially. The deflection from the tangential direction at the wall of the chambers 101 provides an improved separation between dry ice snow 111 and carbon dioxide gas 115.

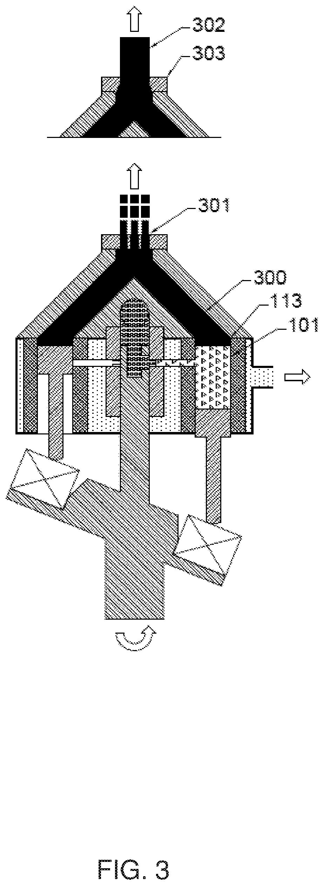

FIG. 3 shows compact dry ice 113 that is fed from press chambers 101 through channel 300 to a common hole plate 301. For example, the hole plate 303 is provided with only one hole for manufacturing a rod of solid dry ice 302. The hole plate 301 may have a larger or smaller diameter and have one or more holes. The holes can be circular, square or have other desired geometric shapes.

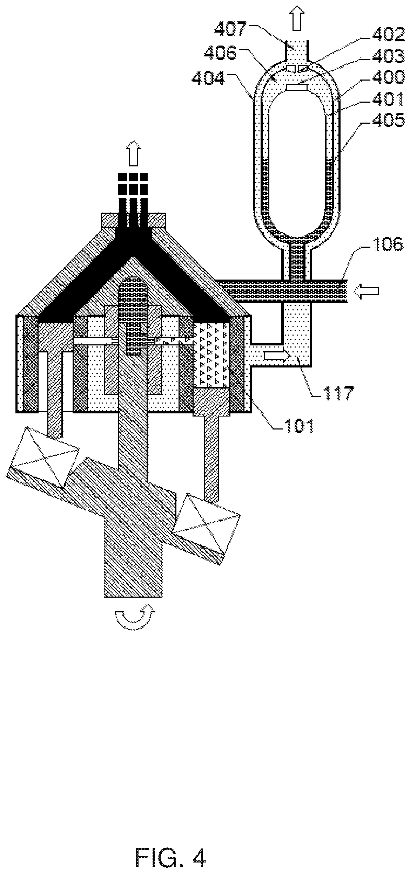

FIG. 4 shows an example of a liquid carbon dioxide supply 106 with a gas separator vessel 400 positioned such that carbon dioxide gas 406 is collected and blown off through a nozzle 402 depending on the level of liquid carbon dioxide 405. Gas occurs because liquid carbon dioxide is often stored at the boiling point, and heat supply in supply pipes causes gas due to evaporation. Gas in the supply causes stop of the dry ice production until the gas has passed, and therefore affects the flow of dry ice pellets. Float 401 is lifted by liquid carbon dioxide 405 and closes at high level the gas exhaust by means of surface 403 pressing against nozzle 402. Nozzle 402 directs carbon dioxide gas 406 to enclosure 404, thereby replacing an optional piping system. Carbon dioxide gas 117 from press chambers 101 is led to the outside of gas separator vessel 400 by enclosure 404. Cold gas from the press chambers 101 cools the outside of the gas separator vessel 400, and liquid carbon dioxide 405 is recovered by condensation of carbon dioxide gas 406 on the inside of the gas separator vessel 400. Exhaust 407 consists of carbon dioxide gas 406 from the gas separator vessel 400 and carbon dioxide gas from the press chambers 117.

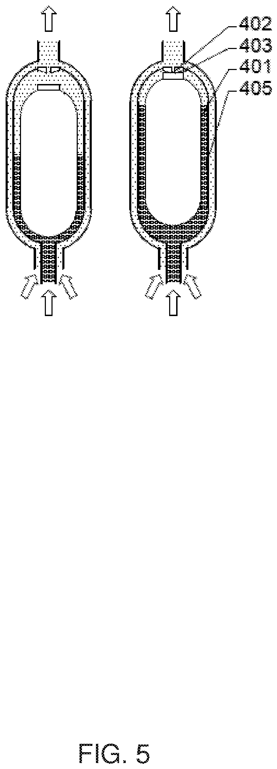

FIG. 5 shows the principle of float 401 that is lifted by liquid carbon dioxide 405 and which at high level closes for exhaust due to the surface 403 pressing against nozzle 402.

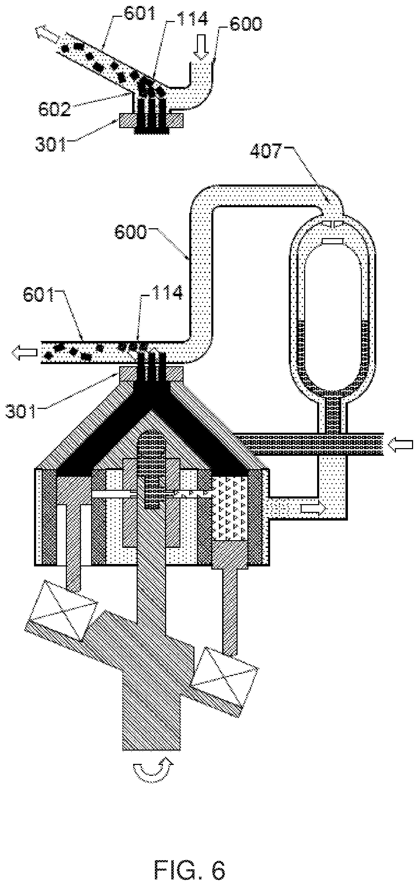

FIG. 6 shows the carbon dioxide gas exiting from the exhaust of the gas separator which is routed through duct 600 to a position in front of the hole plate 301. Dry ice pellets 114 are thereby captured by the exhausted carbon dioxide gas 601 and routed for consumption. Duct 602 around the hole plate 301 may advantageously be formed with oblique sides so that the dry ice pellets 114 break and go free.

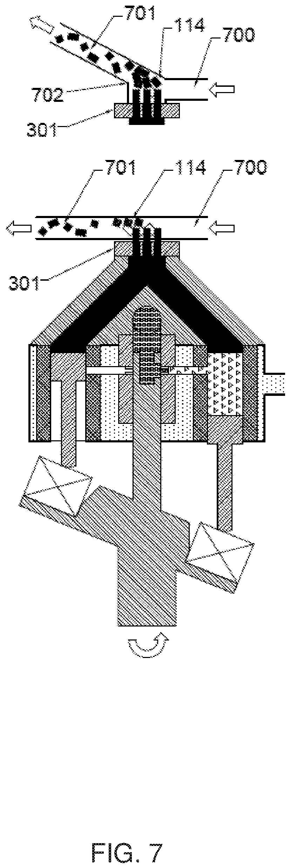

FIG. 7 shows air routed from an air supply through duct 700 to a position in front of the hole plate 301. Dry ice pellets 114 are then captured by the air 701 and routed for consumption. Duct 702 around the hole plate 301 can be formed with oblique sides so that the dry ice pellets 114 break and go free.

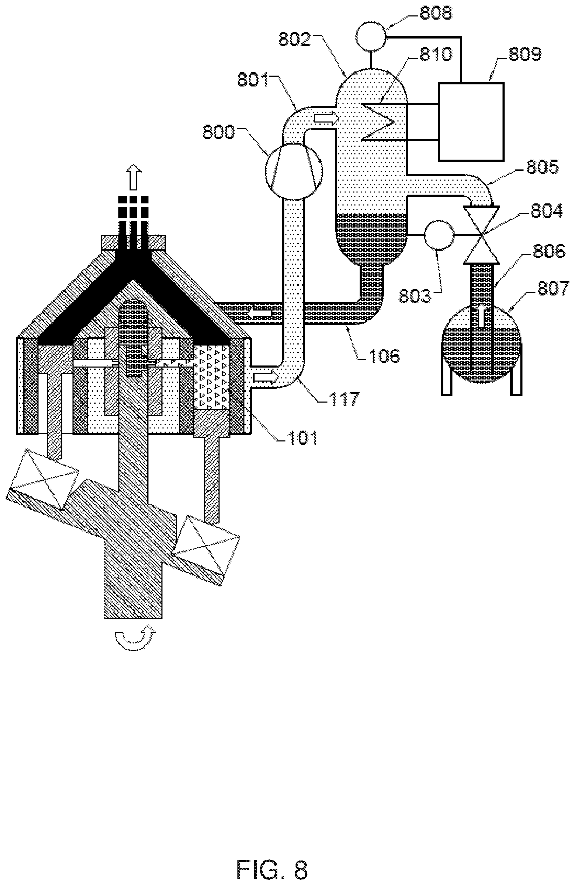

FIG. 8 shows an example of how carbon dioxide gas 117 from the press chambers 101 is routed to a compressor unit 800. In the compressor unit 800, the pressure of the carbon dioxide gas 117 is increased from a low pressure, for example in the range 1-4 Bar(A), to a higher pressure, for example in the range of 8-24 Bar(A) in pipeline 801 to container 802. Container 802 functions as a reservoir for supply of liquid carbon dioxide 106. The level of liquid carbon dioxide is ensured by measurement with level sensor 803, controlling valve 804. At low level 803, valve 804 opens for liquid carbon dioxide 806 from storage tank 807, which is routed via pipeline 805 to container 802. Pressure in container 802 is controlled by measurements by pressure sensor 808, which is connected to a cooling installation 809 that cools a condenser 810. At high pressure 808, cooling of condenser 810 increases so that carbon dioxide gas is condensed to liquid carbon dioxide, and the pressure drops.

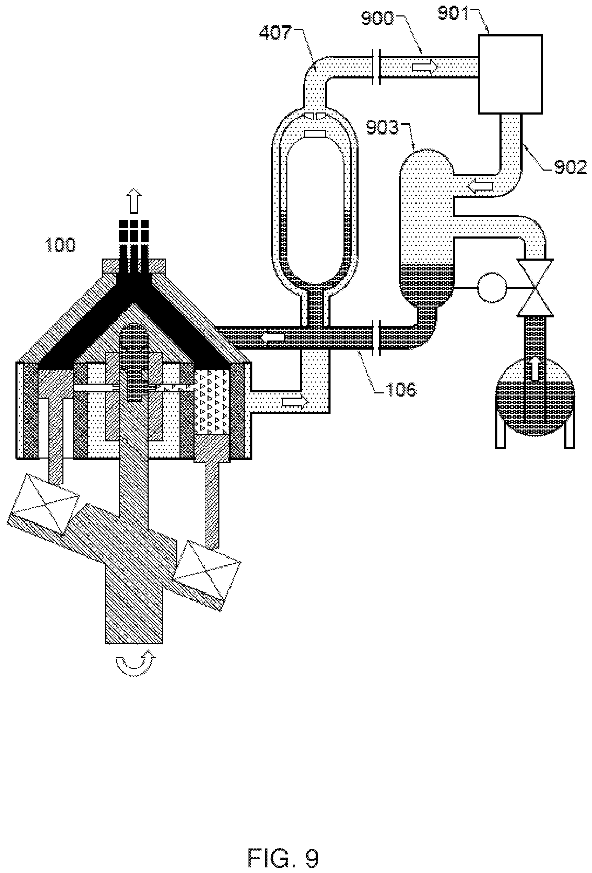

FIG. 9 shows carbon dioxide gas from the gas separator 407, which is routed through duct 900 to an external recycling installation 901. Here, carbon dioxide gas is condensed to liquid and routed via pipeline 902 to reservoir 903 and further as supply of liquid carbon dioxide 106 to the dry ice pelletizer 100.

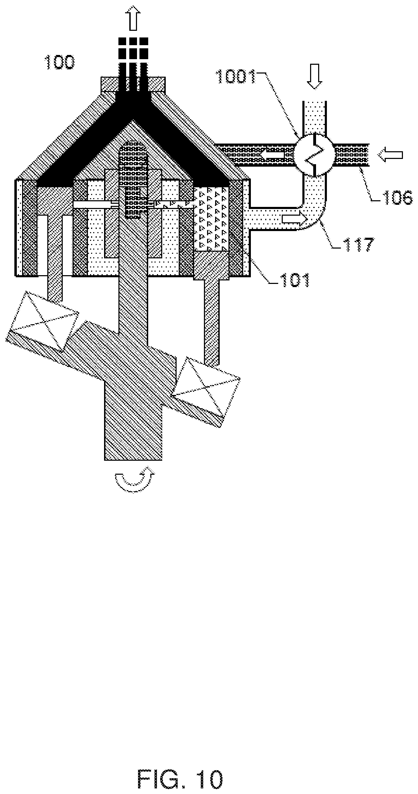

FIG. 10 shows carbon dioxide gas 117 from the press chambers 101, which receive heat in a heat exchanger 1001 from liquid carbon dioxide 106 for the dry ice pelletizer 100.

## Claims

1. Apparatus for the production of dry ice pellets comprising a plurality of press chambers (101) with movable pistons (104) for compressing carbon dioxide in solid phase (113) and for pressing the solid carbon dioxide through a hole plate (103) provided at the end of each press chamber, **characterized in that** the press chambers of the apparatus are arranged at a distance around a central axis, wherein each of the press chambers is provided with its own piston and with an axis of motion, along which the piston reciprocates, and wherein the apparatus comprises a common drive arranged to actuate the pistons alternately one by one in a rotary direction around the central axis.

2. Apparatus according to claim 1, **characterized in that** the axes of movement of the pistons (104) are parallel to the central axis.

3. Apparatus according to claim 1 or 2, **characterized in that** the pistons (104) are disposed on a circle about the central axis.

4. Apparatus according to any one of the preceding claims, **characterized in that**, on and parallel to the central axis, there is provided a center shaft (108) with a carbon dioxide supply in the center shaft (108) and configured for supply of the carbon dioxide in liquid phase (106) to the various press chambers (101) through the center shaft (108) via an axially and longitudinally oriented channel (107) before pressing the solid carbon dioxide through the hole plate (103) by means of the piston (104) in the respective press chambers.

5. Apparatus according to claim 4, **characterized in that** each of the press chambers (101) are connected to the channel (107) in the center shaft (108) through a conduit and that the center shaft (108) is provided rotationally in the rotary direction and has an opening that connects to the conduits of the press chambers one by one during rotation for thereby supplying the carbon dioxide in liquid-phase successively in the direction of rotation to the various press chambers during rotation.

6. Apparatus according to any one of the preceding claims, **characterized in that** the pistons (104) in the press chambers (101) are driven by a common swash plate (105) driven by a motor in which the swash plate has a rotary center shaft (108) on and parallel to the central axis, wherein the swash plate is inclined relative to the central axis, and wherein the pistons are connected to the swash plate so that the swash plate during rotation in the direction of rotation moves the pistons one by one in their respective pressing chamber.

7. Apparatus according to claim 6, **characterized in that** the swash plate (105) comprises an axial bearing (118) against which an end of each of the pistons is in pre-stressed abutment.

8. Apparatus according to any one of the preceding claims, **characterized in that** the press chambers (101) are connected to a channel (300) that routes dry ice from the press chambers to a common hole plate (301).

9. Apparatus according to any one of the preceding claims, **characterized in that** the apparatus comprises a carrier gas facility configured to supply a carrier gas for transporting the dry ice pellets (114) from the hole plates (103, 301) to their destination, the carrier gas facility comprising a gas separator with an exhaust and an inlet, where the inlet is connected to a first duct for routing carbon dioxide gas (117) from the press chambers (101) to the gas separator, and where the exhaust is connected to a second duct (600) for routing said carrier gas in the form of exhausted carbon dioxide gas (601) from the gas separator to at least a position in front of the hole plate (301).

10. Apparatus according to any one of the preceding claims, **characterized in that** the apparatus comprises a carrier gas facility configured to supply a carrier gas for transporting the dry ice pellets (114) from the hole plates (103, 301) to their destination, the carrier gas facility comprising a duct (700) with an air inlet, where the duct (700) is configured to be connected to an air supply for routing said carrier gas in the form of air (701) to at least a position in front of the hole plate (301).

11. Apparatus according to any of the preceding claims, **characterized in that** the apparatus comprises a heat exchanger (1001) with a first outlet and a first inlet for the carbon dioxide gas (117) and a second outlet and a second inlet for the liquid carbon dioxide (106), where heat from the liquid carbon dioxide (106) is transferred to the expanded carbon dioxide gas (117) in the heat exchanger (1001).

## Patentansprüche

1. Vorrichtung zur Herstellung von Trockeneispellets, umfassend eine Vielzahl von Presskammern (101) mit beweglichen Kolben (104) zum Verdichten von Kohlendioxid in fester Phase (113) und zum Pressen des festen Kohlendioxids durch eine Lochplatte (103), die am Ende jeder Presskammer bereitgestellt ist, **dadurch gekennzeichnet, dass** die Presskammern der Vorrichtung in einem Abstand um eine Mittelachse herum angeordnet sind, wobei jede der Presskammern mit ihrem eigenen Kolben und mit einer Bewegungsachse bereitgestellt ist, entlang welcher sich der Kolben hin- und herbewegt, und wobei die Vorrichtung einen gemeinsamen Antrieb umfasst, der angeordnet ist, um die Kolben abwechselnd einen nach dem anderen in einer Drehrichtung um die Mittelachse herum zu betätigen.

2. Vorrichtung nach Anspruch 1, **dadurch gekennzeichnet, dass** die Bewegungsachsen der Kolben (104) parallel zur Mittelachse liegen.

3. Vorrichtung nach Anspruch 1 oder 2, **dadurch gekennzeichnet, dass** die Kolben (104) auf einem Kreis um die Mittelachse herum angeordnet sind.

4. Vorrichtung nach einem der vorhergehenden Ansprüche, **dadurch gekennzeichnet, dass** auf und parallel zu der Mittelachse eine Mittelwelle (108) mit einer Kohlendioxidzufuhr in der Mittelwelle (108) bereitgestellt ist und für eine Zufuhr des Kohlendioxids in flüssiger Phase (106) zu den verschiedenen Presskammern (101) durch die Mittelwelle (108) über einen axial und längs ausgerichteten Kanal (107) konfiguriert ist, bevor das feste Kohlendioxid durch die Lochplatte (103) mittels des Kolbens (104) in die jeweiligen Presskammern gepresst wird.

5. Vorrichtung nach Anspruch 4, **dadurch gekennzeichnet, dass** jede der Presskammern (101) mit dem Kanal (107) in der Mittelwelle (108) durch eine Leitung verbunden ist und dass die Mittelwelle (108) in Drehrichtung drehend bereitgestellt ist und eine Öffnung aufweist, die während der Drehung eine nach der anderen mit den Leitungen der Presskammern verbunden ist, um dadurch das Kohlendioxid in flüssiger Phase sukzessiv den verschiedenen Presskammern während der Drehung in der Drehrichtung zuzuführen.

6. Vorrichtung nach einem der vorhergehenden Ansprüche, **dadurch gekennzeichnet, dass** die Kolben (104) in den Presskammern (101) durch eine gemeinsamen Taumelscheibe (105) angetrieben werden, die durch einen Motor angetrieben wird, in welchem die Taumelscheibe eine drehende Mittelwelle (108) auf und parallel zu der Mittelachse aufweist, wobei die Taumelscheibe relativ zu der Mittelachse geneigt ist, und wobei die Kolben mit der Taumelscheibe verbunden sind, so dass die Taumelscheibe die Kolben während der Drehung in der Drehrichtung einen nach dem anderen in ihre jeweilige Presskammer bewegt.

7. Vorrichtung nach Anspruch 6, **dadurch gekennzeichnet, dass** die Taumelscheibe (105) ein Axiallager (118) umfasst, gegen welches sich ein Ende jedes der Kolben in vorgespannter Anlage befindet.

8. Vorrichtung nach einem der vorhergehenden Ansprüche, **dadurch gekennzeichnet, dass** die Presskammern (101) mit einem Kanal (300) verbunden sind, der Trockeneis von den Presskammern zu einer gemeinsamen Lochplatte (301) leitet.

9. Vorrichtung nach einem der vorhergehenden Ansprüche, **dadurch gekennzeichnet, dass** die Vorrichtung eine Trägergaseinrichtung umfasst, die dazu konfiguriert ist, ein Trägergas zum Transportieren der Trockeneispellets (114) von den Lochplatten (103, 301) ihrem Bestimmungsort zuzuführen, wobei die Trägergaseinrichtung einen Gasabscheider mit einem Auslass und einem Einlass umfasst, wobei der Einlass mit einer ersten Leitung zum Leiten von Kohlendioxidgas (117) von den Presskammern (101) zu dem Gasabscheider verbunden ist und wobei der Auslass mit einer zweiten Leitung (600) zum Leiten des Trägergases in der Form von ausgestoßenem Kohlendioxidgas (601) von dem Gasabscheider zu mindestens einer Position vor der Lochplatte (301) verbunden ist.

10. Vorrichtung nach einem der vorhergehenden Ansprüche, **dadurch gekennzeichnet, dass** die Vorrichtung eine Trägergaseinrichtung umfasst, die dazu konfiguriert ist, ein Trägergas zum Transportieren der Trockeneispellets (114) von den Lochplatten (103, 301) ihrem Bestimmungsort zuzuführen, wobei die Trägergaseinrichtung eine Leitung (700) mit einem Lufteinlass umfasst, wobei die Leitung (700) dazu konfiguriert ist, mit einer Luftzufuhr zum Leiten des Trägergas in der Form von Luft (701) zu mindestens einer Position vor der Lochplatte (301) verbunden ist.

11. Vorrichtung nach einem der vorhergehenden Ansprüche, **dadurch gekennzeichnet, dass** die Vorrichtung einen Wärmetauscher (1001) mit einem ersten Auslass und einem ersten Einlass für das Kohlendioxidgas (117) und einem zweiten Auslass und einem zweiten Einlass für das flüssige Kohlendioxid (106) umfasst, wobei Wärme von dem flüssigen Kohlendioxid (106) auf das ausgedehnte Kohlendioxidgas (117) in dem Wärmetauscher (1001) übertragen wird.

## Revendications

1. Appareil pour la production de pastilles de neige carbonique comprenant une pluralité de chambres de presse (101) avec des pistons mobiles (104) pour comprimer du dioxyde de carbone en phase solide (113) et pour presser le dioxyde de carbone solide à travers une plaque perforée (103) prévue à l'extrémité de chaque chambre de presse, **caractérisé en ce que** les chambres de presse de l'appareil sont disposées à une certaine distance autour d'un axe central, dans lequel chacune des chambres de presse est pourvue de son propre piston et d'un axe de déplacement, le long duquel le piston va et vient, et dans lequel l'appareil comprend un entraînement commun agencé pour actionner les pistons alternativement un par un dans un sens de rotation autour de l'axe central.

2. Appareil selon la revendication 1, **caractérisé en ce que** les axes de déplacement des pistons (104) sont parallèles à l'axe central.

3. Appareil selon la revendication 1 ou 2, **caractérisé en ce que** les pistons (104) sont disposés sur un cercle autour de l'axe central.

4. Appareil selon l'une quelconque des revendications précédentes, **caractérisé en ce que**, sur et parallèlement à l'axe central, il est prévu un arbre central (108) avec une alimentation en dioxyde de carbone dans l'arbre central (108) et configuré pour l'alimentation du dioxyde de carbone en phase liquide (106) vers les différentes chambres de presse (101) à travers l'arbre central (10) par un canal orienté axialement et longitudinalement (107) avant de presser le dioxyde de carbone solide à travers la plaque perforée (103) au moyen du piston (104) dans les chambres de presse respectives.

5. Appareil selon la revendication 4, **caractérisé en ce que** chacune des chambres de presse (101) est reliée au canal (107) dans l'arbre central (108) par un conduit et que l'arbre central (108) est prévu rotativement dans le sens de rotation et présente une ouverture qui se connecte aux conduits des chambres de presse une par une pendant la rotation pour ainsi fournir le dioxyde de carbone en phase liquide successivement dans le sens de rotation aux différentes chambres de presse pendant la rotation.

6. Appareil selon l'une quelconque des revendications précédentes, **caractérisé en ce que** les pistons (104) dans les chambres de presse (101) sont entraînés par un plateau oscillant commun (105) entraîné par un moteur dans lequel le plateau oscillant comporte un arbre central rotatif (108) sur et parallèlement à l'axe central, dans lequel le plateau oscillant est incliné par rapport à l'axe central, et dans lequel les pistons sont reliés au plateau oscillant de sorte que le plateau oscillant pendant la rotation dans le sens de rotation déplace les pistons un par un dans leur chambre de presse respective.

7. Appareil selon la revendication 6, **caractérisé en ce que** le plateau oscillant (105) comprend un roulement axial (118) contre lequel une extrémité de chacun des pistons est en appui précontraint.

8. Appareil selon l'une quelconque des revendications précédentes, **caractérisé en ce que** les chambres de presse (101) sont reliées à un canal (300) qui achemine la neige carbonique des chambres de presse vers une plaque perforée commune (301).

9. Appareil selon l'une quelconque des revendications précédentes, **caractérisé en ce que** l'appareil comprend une installation de gaz porteur configurée pour fournir un gaz porteur pour transporter les pastilles de neige carbonique (114) depuis les plaques perforées (103, 301) jusqu'à leur destination, l'installation de gaz porteur comprenant un séparateur de gaz avec un échappement et une entrée, où l'entrée est reliée à un premier conduit pour acheminer le dioxyde de carbone gazeux (117) des chambres de presse (101) au séparateur de gaz, et où l'échappement est relié à un second conduit (600) pour acheminer ledit gaz porteur sous la forme de gaz carbonique évacué (601) depuis le séparateur de gaz vers au moins une position devant la plaque perforée (301).

10. Appareil selon l'une quelconque des revendications précédentes, **caractérisé en ce que** l'appareil comprend une installation de gaz porteur configurée pour fournir un gaz porteur pour transporter les pastilles de neige carbonique (114) depuis les plaques perforées (103, 301) jusqu'à leur destination, l'installation de gaz porteur comprenant un conduit (700) avec une entrée d'air, où le conduit (700) est configuré pour être relié à une alimentation en air pour acheminer ledit gaz porteur sous forme d'air (701) vers au moins une position devant le plaque perforée (301).

11. Appareil selon l'une quelconque des revendications précédentes, **caractérisé en ce que** l'appareil comprend un échangeur de chaleur (1001) avec une première sortie et une première entrée pour le dioxyde de carbone gazeux (117) et une seconde sortie et une seconde entrée pour le dioxyde de carbone liquide (106), où la chaleur du dioxyde de carbone liquide (106) est transférée au dioxyde de carbone gazeux détendu (117) dans l'échangeur de chaleur (1001).
